# EUROPÄISCHE PATENTSCHRIFT

(11) **EP 2 085 285 B1**
(45) Veröffentlichungstag und Bekanntmachung des Hinweises auf die Patenterteilung: **29.02.2012**
(21) Anmeldenummer: 09150317.7
(22) Anmeldetag: 09.01.2009
(51) Int. Cl.: B61G 11/16, F16F 7/12

(54) **Aufprallschutz mit Aufkletterschutz**
Impact protection with climbing protection
Protection contre la collision dotée d'une protection contre la montée

(30) Priorität: 04.02.2008 DE 102008008026
(43) Veröffentlichungstag der Anmeldung: 05.08.2009
(73) Patentinhaber: Siemens Aktiengesellschaft, 80333 München (DE)
(72) Erfinder: Drexler, Stephan, 81669, München (DE); Kroiß, Manuel, 80689, München (DE)

(56) Entgegenhaltungen:
- DE-A1- 2 757 421
- DE-A1- 19 809 489
- DE-B- 1 279 709

## Beschreibung

Die vorliegende Erfindung betrifft einen Aufprallschutz zur Montage an einer Durchgangsöffnung eines Halterahmens eines Fahrzeugs mit einem ein Pufferende aufweisenden Energieverzehrelement, einer sich am Pufferende in einen Hohlraum des Energieverzehrelementes in einer Längsrichtung erstreckenden Pufferaufnahme, in der ein Puffer über Federmittel abgestützt ist, und Führungsmitteln, die im montierten Zustand des Aufprallschutzes zum Führen der Pufferaufnahme zur Durchgangsöffnung eingerichtet sind.

Ein solcher Aufprallschutz ist aus der DE 198 09 489 A1 bereits bekannt. Der dort beschriebene Aufprallschutz ist für die Montage an einen Halterahmen eines Schienenfahrzeugs vorgesehen und besteht aus einer reversiblen Stufe, die einen Puffer aufweist, der in einer rohrförmigen Pufferaufnahme über Federmittel abgestützt ist. Ferner ist eine irreversible Stufe vorgesehen, die aus einem gezielt deformierbaren Energieverzehrelement besteht. Das Energieverzehrelement ist am Halterahmen befestigt und verjüngt sich zu seinem vom Halterahmen abgewandten Ende hin. Dabei ist das Energieverzehrelement hohl ausgebildet, so dass an seinem vom Halterahmen abgewandten Ende die Pufferaufnahme in Gestalt einer Einstülpung in den Hohlraum des Energieverzehrelementes hineinragen kann. Bei einem Aufprall wird zunächst der Puffer in die Pufferaufnahme unter Anspannung der Federmittel verschoben. Übersteigen die Aufprallkräfte die Federkräfte, kommt es zur gezielten irreversiblen Verformung des Energieverzehrelementes, das aufgrund seiner umfänglichen Erweiterung zum Halterahmen hin dem Verformprozess einen immer größer werdenden Verformungswiderstand entgegenstellt. Um ein Anstoßen der nach innen in das Energieverzehrelement gestülpten Pufferaufnahme an den Halterahmen zu vermeiden, ist in dem Halterahmen eine Durchgangsöffnung vorgesehen, wobei im Inneren des Energieverzehrelementes angeordnete Führungsrippen dafür sorgen, dass die Pufferaufnahme auf die Durchgangsöffnung zu verschoben wird. Dem vorbekannten Aufprallschutz haftet der Nachteil an, dass bei exzentrischen Aufprallkräften die Pufferaufnahme in dem Energieverzehrelement trotz der Führungsrippen verdreht werden kann. Dies kann insbesondere bei hohen Aufprallkräften zu einem unerwünschten Aufklettern der Stoßpartner führen.

Ein Aufkletterschutz für Schienenfahrzeuge ist in der DE 433 22 89 A1 und in der DE 201 17 536 U1 beschrieben. Bei den dort beschriebenen Aufkletterschutzeinrichtungen ist oberhalb und unterhalb eines Seiten- oder Mittelpuffers des Schienenfahrzeugs wenigstens eine aus einem Wagenkasten des jeweiligen Schienenfahrzeugs hervorragende Rippe vorgesehen, die beim Aufprall auf ein Hindernis mit einer entsprechenden Rippe des Hindernisses verhakt und somit das Aufklettern des Hindernisses verhindert.

Die DE 1 279 709 beschreibt einen Aufprallschutz für Schienenfahrzeuge mit Puffern, die über Führungsmittel in Längsrichtung zu einer Durchgangsöffnung im Fahrzeugrahmen geführt sind.

Ein weiterer Aufprallschutz ist in der DE 27 574 21 beschrieben.

Aufgabe der Erfindung ist es einen Aufprallschutz der eingangs genannten Art bereitzustellen, bei dem auch bei exzentrischen Aufprallkräften das Aufklettern eines Hindernisses verhindert wird und die gleichzeitig kostengünstig ist.

Die Erfindung löst diese Aufgabe dadurch, dass die Führungsmittel die Pufferaufnahme teleskopartig bis zur Durchgangsöffnung hin verlängern, so dass über einen Schubsitz in der Durchgangsöffnung eine Führung für die Pufferaufnahme in Längsrichtung bereitgestellt ist.

Erfindungsgemäß ist eine Verlängerung der Pufferaufnahme zur Durchgangsöffnung im Halterahmen des Fahrzeugs bereitgestellt, an welcher der Aufprallschutz befestigt ist. Diese Verlängerung verhindert ein Verdrehen der Pufferaufnahme bezüglich ihrer zur Durchgangsöffnung hin fluchtenden Ausrichtung. Erfindungsgemäß ist durch die teleskopartige Verlängerung ein Schubsitz der Pufferaufnahme in der Durchgangsöffnung bereitgestellt. Mit anderen Worten sind erfindungsgemäß die Führungsmittel in der Durchgangsöffnung montierbar, wobei sie im montierten Zustand in der Durchgangsöffnung angeordnet sind und eine winkelstarre mechanische Verbindung mit der Pufferaufnahme ausbilden. Eine Bewegung der Pufferaufnahme ist erfindungsgemäß nur in einer fluchtend zur Durchgangsöffnung verlaufenden Längsrichtung ermöglicht. Somit wird auch bei exzentrischen Aufprallkräften die Pufferaufnahme sicher durch die Durchgangsöffnung verschoben. Ein Verdrehen der Pufferaufnahme aus ihrer Ausrichtung auf die Durchgangsöffnung hin mit einem Aufklettern des Stoßpartners auf das Fahrzeug des Aufprallschutzes ist im Rahmen der Erfindung vermieden.

Vorteilhafterweise verjüngt sich das Energieverzehrelement von einem Halterahmenende, das zur Montage an dem Halterahmen vorgesehen ist, zum Pufferende hin in Längsrichtung. Auf diese Art und Weise erhöht sich der Verformungswiderstand des Energieverzehrelementes mit fortschreitender Verformung, so dass ein sich allmählich steigernder Abbau von kinetischer Energie ermöglicht ist.

Die erfindungsgemäße teleskopartige Verlängerung ist ferner besonders einfach, kostengünstig und stabil.

Gemäß einer diesbezüglich zweckmäßigen Weiterentwicklung umfassen die Führungsmittel eine rohrförmig ausgestaltete Pufferverlängerung mit einem Pufferaufnahmeende, mit dem die Pufferaufnahme verbunden ist. Anders formuliert umfassen die Führungsmittel eine rohrförmige Pufferverlängerung, die ein Pufferaufnahmeende aufweist. In dieses Pufferaufnahmeende hinein erstreckt sich beispielsweise die Pufferaufnahme. Dabei ist der Innendurchmesser der rohrförmig ausgestalteten Pufferverlängerung zweckmäßigerweise nur etwas größer oder genauso groß wie der Außendurchmesser der Pufferaufnahme, so dass es zu einem Klemmsitz der Pufferaufnahme in dem Pufferaufnahmeende kommt. Der Klemmsitz verbessert die Führungsfähigkeit der Führungsmittel in Längsrichtung. Selbstverständlich ist statt Klemmsitz auch eine feste Verbindung, beispielsweise durch Schweißen, zwischen Pufferaufnahme und Pufferverlängerung im Rahmen der Erfindung möglich. Dabei ist eine bündige Anordnung von Pufferaufnahme und Pufferverlängerung bereitgestellt.

Zweckmäßigerweise erstreckt sich die Pufferverlängerung im montierten Zustand des Aufprallschutzes zumindest teilweise durch die Durchgangsöffnung hindurch. So weist die Pufferverlängerung beispielsweise ein Durchgangsöffnungsende auf, das von ihrem Pufferaufnahmeende abgewandt ist und für einen Spielsitz der Pufferverlängerung in der Durchgangsöffnung sorgt. Dabei ist die Durchgangsöffnung zweckmäßigerweise kreisförmig ausgebildet und weist einen Innenradius auf, der etwas größer ist als der Außenradius der Pufferverlängerung am Durchgangsöffnungsende. Auf diese Art und Weise ist eine teleskopartige Verlängerung bereitgestellt. Bei dem besagten Spielsitz ist für ein Spiel zwischen Durchgangsöffnung und Pufferverlängerung gesorgt, so dass die Montage des Aufprallschutzes vereinfacht ist.

Bei einem diesbezüglich abweichendem Ausführungsbeispiel umfassen die Führungsmittel ein Führungsstück, das im montierten Zustand des Aufprallschutzes sich zumindest teilweise durch die Durchgangsöffnung hindurch erstreckt, wobei die Pufferverlängerung sich mit einem von dem Pufferaufnahmeende abgewandten Führungsstückende in das Führungsstück hinein erstreckt. Abweichend von dem bisherigen Ausführungsbeispiel sind die Führungsmittel zweistückig ausgebildet und umfassen eine beispielsweise rohrförmige Pufferverlängerung und ein Führungsstück, wobei das Führungsstück beispielsweise als Rohrstutzen ausgebildet ist. Das Führungsstück weist eine im Vergleich zur Pufferverlängerung kleine Längserstreckung in Längsrichtung auf. Auf diese Weise kann das Führungsstück bei der Montage leicht in die beispielsweise kreisförmige Durchgangsöffnung eingesetzt werden, wobei leicht Anpassungen an dem Führungsstück bei der Montage vorgenommen werden können. Anschließend wird die beispielsweise rohrförmige Pufferverlängerung mit ihrem Führungsstückende in das Führungsstück eingeführt, wobei das Pufferaufnahmeende nur über einen Spielsitz in dem Führungsstück gehalten ist. Durch die zweistückige Ausgestaltung der Führungsmittel ist das Einstellen eines Spielsitzes und somit die Montage des Aufprallschutzes vereinfacht, wobei bei einer rohrförmigen Ausgestaltung der Pufferverlängerung und des Führungsstückes wieder eine teleskopartige Längsverbindung zwischen Pufferaufnahme und Durchgangsöffnung bereitgestellt ist.

Gemäß einer diesbezüglich zweckmäßigen Weiterentwicklung bildet das Führungsstück einen Rastabsatz aus. Der Rastabsatz vereinfacht die Montage der Führungsmittel in der Durchgangsöffnung noch weiter. So kann das Führungsstück, das beispielsweise als Rohrstutzen ausgebildet ist, mit seinem Rohrstutzen einfach in die Durchgangsöffnung eingefügt werden, wobei der Außendurchmesser des Rohrstutzens kleiner ist als der Innendurchmesser der Durchgangsöffnung. Durch den Rastabsatz ist ein Anschlag für das Führungsstück in der Durchgangsöffnung ausgebildet, so dass eine einfache Montage des Führungsstückes ermöglicht ist.

Die Befestigung der Pufferaufnahme an dem Energieverzehrelement ist grundsätzlich beliebig. So kann die Pufferaufnahme beispielsweise an das Energieverzehrelement angeflanscht sein. Abweichend davon sind Energieverzehrelemente und Pufferaufnahme einstückig ausgebildet.

Die Ausgestaltung des Energieverzehrelementes ist grundsätzlich ebenfalls beliebig. So ist das Energieverzehrelement beispielsweise pyramidenstumpfförmig oder kegelstumpfförmig ausgebildet.

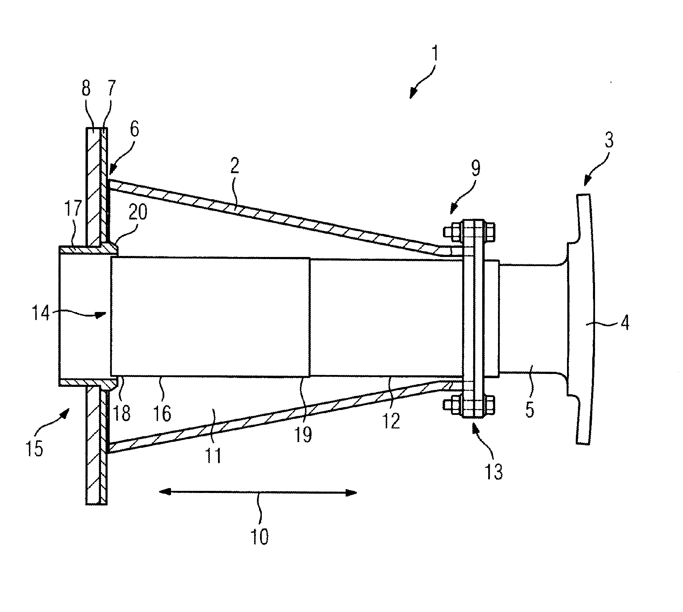

Weitere zweckmäßige Ausgestaltungen und Vorteile der Erfindung sind Gegenstand der nachfolgenden Beschreibung eines Ausführungsbeispiels der Erfindung unter Bezug auf die Figur der Zeichnung, wobei die
- Figur: ein Ausführungsbeispiel des erfindungsgemäßen Aufprallschutzes zeigt.

Die Figur zeigt ein Ausführungsbeispiel des erfindungsgemäßen Aufprallschutzes 1 in einer teilweise geschnittenen Seitenansicht. Der Aufprallschutz 1 verfügt über ein Energieverzehrelement 2 sowie über einen Puffer 3, der einen Pufferteller 4 sowie einen Pufferstößel 5 umfasst.

Das Energieverzehrelement 2 hat ein Halterahmenende 6, an dem es mittels einer nur teilweise in der Figur gezeigten Halteplatte 7 über geeignete figürlich nicht dargestellte Flanschverbindungen an einem Halterahmen 8 eines Schienenfahrzeugs, beispielsweise einer Lokomotive, befestigt ist. Darüber hinaus verfügt das Energieverzehrelement 2 über ein Pufferende 9, an dem der Puffer 3 angeordnet ist. Dabei erstreckt sich das Energieverzehrelement 2 von dem Halterahmenende 6 zum Pufferende 9 in einer Längsrichtung 10 und verjüngt sich dabei. So ist das in der Figur gezeigte Energieverzehrelement 2 pyramidenstumpfförmig ausgebildet.

Durch die geschnitten gezeichnete Wandung des Energieverzehrelementes 2 ist in ihrem Inneren ein Hohlraum 11 begrenzt, in den hinein sich eine Pufferaufnahme 12 erstreckt. Die Pufferaufnahme 12 ist über eine Flanschverbindung 13 am Pufferende 9 fest mit dem Energieverzehrelement 2 verbunden. Der mit seinem Pufferstößel 5 in die hohlzylindrische Pufferaufnahme 12 hineinragende Puffer 3 ist über in der Figur nicht dargestellte Federmittel an der Pufferaufnahme 12 abgestützt, so dass es bei einem Aufprall des Aufprallschutzes 1 auf ein Hindernis zu einer reversiblen Verschiebung des Puffers 3 in Längsrichtung 10 kommen kann, bis der Pufferteller 4 schließlich an der Pufferaufnahme 12 anschlägt. Anschließend kommt es zur irreversiblen Verformung des Energieverzehrelementes 2, das dann wie eine Ziehharmonika in Längsrichtung 10 zusammengefaltet wird. Um die Deformationsfähigkeit des Energieverzehrelementes 2 nicht zu begrenzen, ist in dem Halterahmen 8 eine Durchgangsöffnung 14 vorgesehen, deren Innendurchmesser größer ist als der Außendurchmesser der in diesem Fall kreiszylindrisch und hohl ausgestalteten Pufferaufnahme 12.

Um auch bei exzentrischen Stößen, also Stößen mit einer Stoßrichtung, deren Projektion in die Zeichenebene der Figur mit der Längsrichtung 10 einen von 180 Grad abweichenden Winkel aufspannt, ein Verdrehen der Pufferaufnahme 12 in der Zeichenebene und somit ein Aufklettern zu vermeiden, sind Führungsmittel 15 vorgesehen. Die Führungsmittel 15 umfassen in dem gezeigten Ausführungsbeispiel eine Pufferverlängerung 16 sowie ein Führungsstück 17. Das Führungsstück 17 ist als Rohrstutzen ausgebildet und weist an seinem der Pufferverlängerung 16 zugewandten Ende ein Rastabsatz 20 auf. Der Rastabsatz 20 überragt den Außendurchmesser des hohlzylindrischen Rohrstutzens umfänglich, wobei der besagte Außendurchmesser etwas kleiner oder gleich dem Innendurchmesser der Durchgangsöffnung 14 im Halterahmen 8 ist. Aufgrund dieser Ausgestaltung ist das Führungsstück 17 leicht in der Durchgangs öffnung 14 einsetzbar, wobei ein Klemmsitz bereitgestellt ist. Auch ist eine feste Schweißverbindung möglich. Der Außendurchmesser der rohrförmigen Pufferverlängerung 16 ist hingegen etwas kleiner als der Innendurchmesser des Führungsstückes 17, so dass die Pufferverlängerung 16 mit ihrem Führungsstückende 18 einen Spielsitz im Führungsstück 17 realisiert. Mit dem Spielsitz ist es ermöglicht, zunächst das Führungsstück 17 der Durchgangsöffnung 14 zu befestigen und anschließend die Pufferverlängerung 16 leicht in das Führungsstück 17 einzusetzen. Die Pufferverlängerung 16 hat bezüglich des Führungsstückes 17 etwas Spiel.

An ihrem Pufferaufnahmeende 19 ist die Pufferverlängerung 16 hingegen durch einen Klemmsitz mit der Pufferaufnahme 12 verbunden. Hierzu ist der Innendurchmesser der Pufferverlängerung 16 gleich oder etwas größer als der Außendurchmesser der Pufferverlängerung 12. Durch den verdrehsicheren Sitz bei gleichzeitiger Beweglichkeit in Längsrichtung 10 ist für die Pufferaufnahme 12 ein Schubsitz in der Durchgangsöffnung 14 bereitgestellt. Selbstverständlich ist im Rahmen der Erfindung statt eines Klemmsitzes zwischen Pufferaufnahme 12 und Pufferverlängerung 16 auch eine feste Verbindung mittels Schweißnaht oder dergleichen möglich. Auch bei einer festen Verbindung zwischen Pufferaufnahme 12 und Pufferverlängerung 16 ist für einen Schubsitz gesorgt.

Fährt das Schienenfahrzeug mit höherer Geschwindigkeit auf ein Hindernis, wird zunächst der Puffer 3 bis zum Anschlag reversibel in die Pufferaufnahme 12 hinein verschoben. Anschließend kommt es zum Zusammenfalten des Energieverzehrelementes 2, wobei die Führungsmittel 15 ein Verdrehen des Puffers 3 in der Ebene der Figur verhindern und für ein sicheres Durchschieben der in das Innere des Energieverzehrelementes 2 hineinragende Pufferaufnahme 12 durch die Durchgangsöffnung 14 sorgen. Auf diese Weise ist ein Aufklettern des Hindernisses an dem Fahrzeug auch bei exzentrischen Aufprallkräften vermieden.

## Patentansprüche

1. Aufprallschutz (1) zur Montage an einer Durchgangsöffnung (14) eines Halterahmens (8) eines Fahrzeugs mit
- einem ein Pufferende (9) aufweisenden Energieverzehrelement (2),
- einer sich am Pufferende (9) in einen Hohlraum (11) des Energieverzehrelementes (2) in einer Längsrichtung (10) erstreckenden Pufferaufnahme (12), in der ein Puffer (3) über Federmittel abgestützt ist, und
- Führungsmitteln (15), die im montierten Zustand des Aufprallschutzes (1) zum Führen der Pufferaufnahme (12) zur Durchgangsöffnung (14) eingerichtet sind,
**dadurch gekennzeichnet, dass** die Führungsmittel (15) die Pufferaufnahme (12) teleskopartig bis zur Durchgangsöffnung (14) hin verlängern, so dass über einen Schubsitz in der Durchgangsöffnung (14) eine Führung für die Pufferaufnahme (12) in Längsrichtung (10) bereitgestellt ist.

2. Aufprallschutz (1) nach Anspruch 1,
**dadurch gekennzeichnet, dass** sich das Energieverzehrelement (2) von einem Halterahmenende (6), das zur Montage an dem Halterahmen (8) vorgesehen ist, zum Pufferende (9) hin in Längsrichtung (10) verjüngt.

3. Aufprallschutz (1) nach Anspruch einem der vorhergehenden Ansprüche,
**dadurch gekennzeichnet, dass** die Führungsmittel (15) eine rohrförmig ausgestaltete Pufferverlängerung (16) mit einem Pufferaufnahmeende (19) umfassen, mit dem die Pufferaufnahme (12) verbunden ist.

4. Aufprallschutz (1) nach Anspruch 3,
**dadurch gekennzeichnet, dass** die Pufferverlängerung (16) sich im montierten Zustand des Aufprallschutzes (1) zumindest teilweise durch die Durchgangsöffnung (14) hindurch erstreckt.

5. Aufprallschutz (1) nach Anspruch 3,
**dadurch gekennzeichnet, dass** die Führungsmittel (15) ein Führungsstück (17) umfassen, das im montierten Zustand des Aufprallschutzes (1) sich zumindest teilweise durch die Durchgangsöffnung (14) hindurch erstreckt, wobei die Pufferverlängerung (16) sich mit einem von dem Pufferaufnahmeende (19) abgewandten Führungsstückende (18) in das Führungsstück (17) hinein erstreckt.

6. Aufprallschutz (1) nach Anspruch 5,
**dadurch gekennzeichnet, dass** das Führungsstück (17) einen Rastabsatz (20) zur verbesserten Montage an der Durchgangsöffnung (14) aufweist.

7. Aufprallschutz (1) nach einem der vorhergehenden Ansprüche,
**dadurch gekennzeichnet, dass** die Pufferaufnahme (12) an das Energieverzehrelement (2) angeflanscht ist.

8. Vorrichtung (1) nach einem der Ansprüche 1 bis 6, **dadurch gekennzeichnet, dass** die Pufferaufnahme (12) und das Energieverzehrelement (2) einstückig ausgestaltet sind.

9. Aufprallschutz (1) nach einem der vorhergehenden Ansprüche,
**dadurch gekennzeichnet, dass** das Energieverzehrelement (2) pyramidenstumpfförmig ausgebildet ist.

10. Aufprallschutz (1) nach einem der Ansprüche 1 bis 8, **dadurch gekennzeichnet, dass** das Energieverzehrelement (2) kegelstumpfförmig ausgebildet ist.

## Claims

1. Impact protection (1) for installing on a passage opening (14) in a holding frame (8) of a vehicle, with
- an energy-consuming element (2) having a buffer end (9),
- a buffer receptacle (12) which extends in a longitudinal direction (10) at the buffer end (9) into a cavity (11) of the energy-consuming element (2) and in which a buffer (3) is supported via spring means, and
- guide means (15) which, in the fitted state of the impact protection (1), are designed to guide the buffer receptacle (12) to the passage opening (14),
**characterized in that** the guide means (15) telescopically extend the buffer receptacle (12) as far as the passage opening (14), and therefore a guide for the buffer receptacle (12) in the longitudinal direction (10) is provided via a sliding fit in the passage opening (14).

2. Impact protection (1) according to Claim 1, **characterized in that** the energy-consuming element (2) tapers in the longitudinal direction (10) from a holding frame end (6), which is provided for installation of the holding frame (8), towards the buffer end (9).

3. Impact protection (1) according to one of the preceding claims, **characterized in that** the guide means (15) comprise a buffer extension (16) which is of tubular configuration and has a buffer-receiving end (19) to which the buffer receptacle (12) is connected.

4. Impact protection (1) according to Claim 3, **characterized in that**, in the fitted state of the impact protection (1), the buffer extension (16) at least partially extends through the passage opening (14).

5. Impact protection (1) according to Claim 3, **characterized in that** the guide means (15) comprise a guide piece (17) which, in the fitted state of the impact protection (1), at least partially extends through the passage opening (14), the buffer extension (16) extending into the guide piece (17) by means of a guide piece end (18) which faces away from the buffer-receiving end (19).

6. Impact protection (1) according to Claim 5, **characterized in that** the guide piece (17) has a latching step (20) for improved installation on the passage opening (14).

7. Impact protection (1) according to one of the preceding claims, **characterized in that** the buffer receptacle (12) is flange-mounted onto the energy-consuming element (2).

8. Device (1) according to one of Claims 1 to 6, **characterized in that** the buffer receptacle (12) and the energy-consuming element (2) are configured as a single piece.

9. Impact protection (1) according to one of the preceding claims, **characterized in that** the energy-consuming element (2) is designed in the shape of a truncated pyramid.

10. Impact protection (1) according to one of Claims 1 to 8, **characterized in that** the energy-consuming element (2) is designed in the shape of a truncated cone.

## Revendications

1. Protection ( 1 ) à l'encontre de la collision pour le montage sur une ouverture ( 14 ) traversante d'un cadre ( 8 ) de maintien d'un véhicule, comprenant
- un élément ( 2 ) consommant de l'énergie et ayant une extrémité de tampon,
- un logement ( 12 ) de tampon, qui s'étend dans une direction ( 10 ) longitudinale à l'extrémité ( 9 ) de tampon dans une cavité ( 11 ) de l'élément ( 2 ) consommant de l'énergie et dans laquelle un tampon ( 3 ) est appuyé par un moyen à ressort, et
- des moyens ( 15 ) de guidage, qui, lorsque la protection ( 1 ) à l'encontre de la collision est à l'état monté, sont conçus pour guider le logement ( 12 ) de tampon vers l'ouverture ( 14 ) traversante,
**caractérisée en ce que**
les moyens ( 15 ) de guidage prolongent le logement ( 12 ) de tampon télescopiquement jusqu'à l'ouverture ( 14 ) traversante, de manière à ménager, par un siège coulissant dans l'ouverture ( 14 ) traversante, un guidage du logement ( 12 ) de tampon dans la direction ( 10 ) longitudinale.

2. Protection ( 1 ) à l'encontre de la collision suivant la revendication 1,
**caractérisée en ce que**
l'élément ( 2 ) consommant de l'énergie se rétrécit dans la direction ( 10 ) longitudinale d'une extrémité ( 6 ) du cadre de maintien, qui est prévue pour le montage sur le cadre ( 8 ) de maintien, à l'extrémité ( 9 ) de tampon.

3. Protection ( 1 ) à l'encontre de la collision suivant l'une des revendications précédentes,
**caractérisée en ce que**
les moyens ( 15 ) de guidage comprennent une rallonge ( 16 ) de tampon tubulaire, ayant une extrémité ( 19 ) de logement de tampon, à laquelle le logement ( 12 ) de tampon est relié.

4. Protection ( 1 ) à l'encontre de la collision suivant la revendications 3,
**caractérisée en ce que**
la rallonge ( 16 ) de tampon s'étend, lorsque la protection ( 1 ) à l'encontre de la collision est montée, au moins en partie, dans l'ouverture ( 14 ) traversante.

5. Protection ( 1 ) à l'encontre de la collision suivant la revendication 3,
**caractérisé en ce que**
les moyens ( 15 ) de guidage comprennent une pièce ( 17 ) de guidage, qui, lorsque la protection ( 1 ) à l'encontre de la collision est à l'état monté, s'étend, au moins en partie, dans l'ouverture ( 14 ) traversante, la rallonge ( 16 ) de tampon s'étendant dans la pièce ( 17 ) de guidage par une extrémité ( 18 ) de pièce de guidage éloignée de l'extrémité ( 19 ) du logement de tampon.

6. Protection ( 1 ) à l'encontre de la collision suivant la revendication 5,
**caractérisée en ce que** la pièce ( 17 ) de guidage comporte un ressaut ( 20 ) d'encliquetage pour améliorer le montage sur l'ouverture ( 14 ) traversante.

7. Protection ( 1 ) à l'encontre de la collision suivant l'une des revendications précédentes,
**caractérisée en ce que**
le logement ( 12 ) de tampon est bridé sur l'élément ( 2 ) consommant de l'énergie.

8. Protection ( 1 ) à l'encontre de la collision suivant l'une des revendications 1 à 6,
**caractérisée en ce que**
le logement ( 12 ) de tampon et l'élément ( 2 ) consommant de l'énergie sont d'une seule pièce.

9. Protection ( 1 ) à l'encontre de la collision suivant l'une des revendications précédentes,
**caractérisé en ce que**
l'élément ( 2 ) consommant de l'énergie est en forme de tronc de pyramide.

10. Protection ( 1 ) à l'encontre de la collision suivant l'une des revendications 1 à 8,
**caractérisée en ce que**
l'élément ( 2 ) consommant de l'énergie est en forme de tronc de cône.
